(19) Europäisches Patentamt
European Patent Office
Office européen des brevets

(11) **EP 1 548 645 B1**

(12) **EUROPÄISCHE PATENTSCHRIFT**

(45) Veröffentlichungstag und Bekanntmachung des Hinweises auf die Patenterteilung:
**23.04.2008 Patentblatt 2008/17**

(51) Int Cl.:
*G06T 5/00* (2006.01)      *G06T 5/10* (2006.01)
*H04N 1/409* (2006.01)     *H04N 1/58* (2006.01)
*H04N 5/232* (2006.01)

(21) Anmeldenummer: **03029392.2**

(22) Anmeldetag: **19.12.2003**

(54) **Verfahren zur Verarbeitung digitaler Bilddaten von verwackelten Aufnahmen**

Method of processing digital image data from motion blurred exposures

Procédé de traitement d'images numériques comportant du flou de mouvement

(84) Benannte Vertragsstaaten:
**CH DE FR GB IT LI**

(43) Veröffentlichungstag der Anmeldung:
**29.06.2005 Patentblatt 2005/26**

(73) Patentinhaber: **Imaging Solutions AG**
**8105 Regensdorf (CH)**

(72) Erfinder:
- **Müller, Peter**
  **86415 Mering (DE)**
- **Musewald, Christian**
  **84513 Töging am Inn (DE)**

(74) Vertreter: **Taresch, Gudrun**
**Oberhardt Taresch**
**Maistrasse 63**
**80337 München (DE)**

(56) Entgegenhaltungen:
US-A- 3 947 109          US-A- 5 111 515
US-A- 5 365 303          US-A1- 2002 122 133
US-A1- 2003 011 717

- **PATENT ABSTRACTS OF JAPAN vol. 2000, no. 01, 31. Januar 2000 (2000-01-31) & JP 11 284944 A (CANON INC), 15. Oktober 1999 (1999-10-15)**

**Beschreibung**

Die Erfindung betrifft ein Verfahren zum Verarbeiten digitaler Bilddaten von mit einer fotografischen Kamera erfassten Bildern.

Bei der Aufnahme von Fotografien kommt es insbesondere bei längeren Belichtungszeiten oftmals dazu, dass der Fotograf die Kamera nicht ruhig halten kann oder das Motiv sich während der Belichtung bewegt, so dass die Aufnahme verwackelt. Das aufgenommene Bild erscheint dann unscharf, das Motiv ist oftmals nur schwer zu erkennen. Da diese Bilder im Allgemeinen als Ausschuss betrachtet werden, ist es nicht gewünscht, von diesen Bildern Abzüge zu machen. Dennoch gelangen diese Bilder über einzuscannende Filme oder direkt von der Digitalkamera ins Fotolabor, wo automatisch von den Bildern Abzüge erstellt werden, denn der Fotograf ist auch bei digitalen Kameras oftmals nicht in der Lage auf den kleinen, niedrig aufgelösten Displays zu erkennen, dass die Aufnahme unscharf ist.

So wurden bereits für analoge Kopiergeräte in Fotolaboren Verfahren entwickelt, welche unscharfe Bilder erkennen. Ein Beispiel hierfür ist in der DE 34 08 765 C2 beschrieben. Hier werden die als unscharf erkannten Kopiervorlagen beim Kopieren ausgesondert, von diesen Bildern wird kein Abzug hergestellt. Dies ist für den Fotografen jedoch oftmals unbefriedigend, da er oft gerne besonders von nicht allzu verwackelten Aufnahmen einen Abzug als Erinnerung hätte.

Daher wurden Verfahren entwickelt derartige verwackelte Aufnahmen zu korrigieren. So beschreibt bspw. die US 2003/011717 A ein Verfahren, bei dem Bilddaten analysiert werden, um den Richtungsvektor einer Verwacklung zu bestimmen. Ist dieser bekannt, so werden die Amplituden der Bilddaten entlang des Richtungsvektors erhöht. Hierdurch werden zwar die durch die Verwacklung reduzierten Bildanteile angehoben, allerdings wird dabei auch der aufgrund der Verwacklung verschmierte Anteil der Bilddaten angehoben. Deshalb ist dieses Verfahren unbefriedigend.

In der US 2002/122133 A wird ein Verfahren beschrieben, bei dem vom selben Motiv zwei Aufnahmen unterschiedlicher Belichtungszeit gemacht werden. Die Bilder werden miteinander verrechnet um Verwacklungen, die bei der längeren Belichtungszeit auftreten, zu korrigieren. Diese Verfahren ist jedoch nicht anwendbar, wenn nur eine Aufnahme eines Motivs zur Verfügung steht.

In der US 5,111,515 wird vorgeschlagen die optische Fouriertransformierte eines Bildes mit einer vorbestimmten Verschmierungsfunktion zu beaufschlagen um nach der Rücktransformation ein korrigiertes Bild zu erhalten.

Aufgabe der Erfindung war es deshalb, ein Verfahren zu entwickeln, bei dem wenigstens ein Teil der unscharfen Aufnahmen im Nachhinein möglichst gut korrigiert werden kann.

Erfindungsgemäß werden diejenigen unter den unscharfen Aufnahmen gesucht, deren Unschärfe vom Verwackeln, also von einer Relativbewegung von Kamera und Motiv während der Belichtung verursacht wurde. Überraschenderweise konnte gezeigt werden, dass diese verwackelten Aufnahmen durch gezielte Korrekturmaßnahmen soweit restauriert werden können, dass akzeptable Aufnahmen entstehen, welche auf ein Wiedergabe- oder Speichermedium ausgegeben wer den können. Damit werden nicht mehr alle unscharfen Aufnahmen einfach als unbrauchbar verworfen, sondern ein Teil derselben wird geschickt soweit modifiziert, dass sich ein akzeptables Bild ergibt. Die Ausschussrate der Bilder wird also deutlich geringer, der Fotograf erhält mehr Abzüge seiner oftmals unwiederbringlichen Aufnahmen. Gerade bei einmaligen Aufnahmen kann dieses Verfahren große Vorteile bringen, da es zwar nicht unbedingt zu einem perfekten Bild führt, die Aufnahme aber soweit verbessert wird, dass das Motiv sehr gut zu erkennen ist und das Bild gern vom Fotografen als Erinnerung aufgehoben wird.

Verwackelte Aufnahmen werden identifiziert, indem die Bilddaten entlang wenigstens zweier ihrer Dimensionen, also z. B. in x- und y-Richtung auf ihre Schärfe hin untersucht werden. Durch die Relativbewegung, welche während der Aufnahme stattgefunden hat, kommt es nämlich in den wiedergegebenen Bilddaten zu einer gerichteten Unschärfe. Die Unschärfe besteht in Richtung der Relativbewegung, entlang anderer Richtungen, insbesondere senkrecht dazu, können die Bilddaten dagegen scharf sein. Verwackelte Aufnahmen sind also dadurch gekennzeichnet, dass sie entlang verschiedener Richtungen im Bild einen unterschiedlichen Schärfegrad aufweisen. Während also unscharfe Aufnahmen dadurch erkannt werden, dass entlang aller zu untersuchenden Richtungen im Bild keine scharfen Strukturen zu finden sind, werden verwackelte Aufnahmen daran erkannt, dass sie zwar entlang einer Richtung unscharf sind, entlang einer anderen, im Wesentlichen dazu senkrechten Richtung, scharf sind. Auch wenn dieser theoretische Idealfall nicht immer vorliegt, kann man zumindest davon ausgehen, dass ihr Schärfegrad entlang unterschiedlicher Bildrichtungen unterschiedlich ist. Obwohl es vorteilhaft ist, müssen die zu untersuchenden Richtungen nicht unbedingt senkrecht aufeinander stehen. Es könnte sich auch beispielsweise um eine Parallele zu einer Bildseite und die Bilddiagonale handeln, welche untersucht werden.

Um verwackelte Aufnahmen zu identifizieren, können alle zu bearbeitenden Aufnahmen untersucht werden. Um Rechenzeit einzusparen ist es allerdings oftmals sinnvoller, die verwackelten Aufnahmen nur unter den Aufnahmen zu suchen, welche bereits als unscharf detektiert wurden.

Um die Schärfe einer Aufnahme entlang einer Richtung zu untersuchen, können beispielsweise scharfe Übergänge, also Kanten in den Bilddaten gesucht werden. Bei unscharfen Aufnahmen treten nämlich keine derartigen Kanten auf, da hier die Dichtesprünge verwaschen sind. Derartige Kantendetektionsverfahren sind beispielsweise aus der Bilddatenverschärfung bekannt. Eines dieser Verfahren ist in der EP 1 122 689 beschrieben. Es ist aber auch möglich, verwackelte Aufnahmen dadurch zu erkennen, dass entlang wenigstens zweier Richtungen der Bilddaten eine Fouriertransformation vorgenommen wird. Man kann davon ausgehen, dass das Bild verwackelt wurde, wenn in der Fouriertransformierten entlang einer Richtung viel größere Amplituden der auftretenden höheren Frequenzen beobachtet werden als entlang einer anderen untersuchten Richtung.

Um sicherer feststellen zu können, ob es sich um eine verwackelte oder eine unscharfe Aufnahme handelt, ist es wünschenswert, nicht nur entlang zweier Richtungen zu untersuchen, sondern entlang dreier Richtungen. Hier können sich beispielsweise die Koordinatenachsen und die Bilddiagonale anbieten.

Um die als verwackelt identifizierten Aufnahmen zu korrigieren wird eine Fouriertransformation der Bilddaten vorgenommen.

Dabei werden die Bilddaten vom Orts- in den Frequenzraum transferiert. Im Frequenzraum kann dann die das Bildmotiv störende Frequenz ermittelt werden, welche durch die Relativbewegung bei der Aufnahme dem Bildmotiv überlagert wurde. Die erfindungsgemäße Korrektur zielt nun darauf ab, diesen Störanteil vom eigentlichen aufgenommenen Bildanteil zu trennen, so dass dieser Störanteil durch einen Korrekturanteil ersetzt werden kann, was auch ein einfaches Eliminieren des Störanteils umfasst, so dass anschließend der ursprünglich gewünschte Bildanteil und der Korrekturanteil wiederum zusammengefasst werden können, woraus sich der korrigierte Bildinhalt ergibt, welcher eine vergleichsweise ungestörte Darstellung des aufzunehmenden Bildmotivs umfasst.

Um Bildanteil und Störanteil der Bilddaten zu entkoppeln wird die Fouriertransformierte logarithmiert. Hierdurch erreicht man eine Umwandlung in eine Summe der Anteile, so dass der Störanteil der Bilddaten getrennt vom eigentlich gewünschten Bildmotiv, also den Bildanteil, vorliegt. Es gibt jedoch auch weitere Möglichkeiten zur Entkopplung von Stör- und Bildanteil. Um dieses Korrekturverfahren etwas transparenter zu erläutern, werden im Folgenden die mathematischen Entsprechungen der beschriebenen Schritte dargestellt.

Das verwackelte Bild $f'(x,y)$ lässt sich an jedem Bildpunkt $(x,y)$ darstellen als

$$f'(x,y) = \sum_{i,j=1}^{n} a_{ij} f\left(x - \Delta x_i, y - \Delta y_j\right)$$

also als Summe der mehrmals um verschiedene Faktoren verschobenen selben Bildinformation.

Durch eine Fouriertransformation ergibt sich daraus die Fouriertransformierte des verwackelten Bildes

$$F'(\omega_x, \omega_y) = \sum_{i,j=1}^{n} a_{ij} F(\omega_x, \omega_y) e^{-i(\omega_x + \omega_y)}$$

$$= F(\omega_x, \omega_y) \sum_{i,j=1}^{n} a_{ij} e^{-i(\omega_x + \omega_y)}$$

$$= F(\omega_x, \omega_y) S(\omega_x, \omega_y),$$

also eine Faltung aus "reinem" Bildanteil $F(\omega_x, \omega_y)$ und einem Störanteil $S(\omega_x, \omega_y)$.

Eine Möglichkeit, beide Anteile zu trennen besteht nun in einer Quotientenbildung. Dabei ergibt sich der Bildanteil durch

$$F(\omega_x, \omega_y) = \frac{F'(\omega_x, \omega_y)}{S(\omega_x, \omega_y)}$$

Dieses Verfahren ist zwar prinzipiell anwendbar, man müsste jedoch die Problematik der Division durch Null vermeiden.

Ein vorteilhafteres Verfahren zur Entkopplung von Stör- und Bildanteil besteht deshalb in einer Logarithmierung der Fouriertransformierten, wobei sich

$$\log F'(\omega_x, \omega_y) = \log F(\omega_x, \omega_y) + \log S(\omega_x, \omega_y),$$

oder

$$F_l'(\omega_x, \omega_y) = F_l(\omega_x, \omega_y) + S_l(\omega_x, \omega_y)$$

also eine Summe aus Bild- und Störanteil ergibt.

Nach erneuter Fouriertransformation folgt daraus

$$f_l'(x, y) = f_l(x, y) + S_l(\Delta_x, \Delta_y).$$

Nun kann der Störanteil $s_l(\Delta_x, \Delta_y)$, welcher vom Bildanteil entkoppelt und auf einen definierten räumlichen Bereich beschränkt ist, durch einen Korrekturanteil ersetzt werden. Im Einzelnen wird dies anhand der Figurenbeschreibung erläutert.

Durch folgende Fourier-Rück-Transformationen und Anwendung der Exponentialfunktion wird diese korrigierte Funktion schließlich in korrigierte Bilddaten rückverwandelt.

Vorteilhafterweise werden die als verwackelt identifizierten Aufnahmen bei der Ausgabe der digitalen Bilder als verwackelt gekennzeichnet. Dadurch kann der Kunde erkennen, dass das Bildmotiv zwar nicht optimal erfasst wurde, mittels der Bildbearbeitung aber versucht wurde, ein akzeptables Bild daraus zu gestalten. Um dem Kunden einen Vergleich zwischen seiner ursprünglichen Aufnahme und dem korrigierten Bild zu ermöglichen, ist es weiterhin vorteilhaft, sowohl die ursprüngliche, verwackelte Aufnahme als auch die korrigierten Bilddaten auszugeben. Dies muss zwar nicht in Form von zwei tatsächlichen Ausdrucken erfolgen, sinnvoller ist es, wenn beide Datensätze digital zur Verfügung gestellt werden.

Die Kennzeichnung der verwackelten Aufnahmen kann vorteilhafterweise auf dem Indexprint vorgenommen werden.

Weiterhin ist es vorteilhaft, die verwackelten, korrigierten Aufnahmen gesondert auszugeben. Diese gesonderte Ausgabe ermöglicht es dem Finisher, sie nochmal zu überprüfen, um zu sehen, ob man diese Aufnahme nun tatsächlich an den Kunden verkaufen kann oder ob die Bildqualität weiterhin auch nach der Korrektur so schlecht ist, dass sie als Ausschuss zu behandeln ist.

Weitere Merkmale und Vorteile der Erfindung ergeben sich aus der folgenden Beschreibung bevorzugter Ausführungsformen und Anwendungsbeispiele, wobei Bezug auf die beigefügten Zeichnungen genommen wird.

Es zeigen:

Fig. 1    verwackeltes Originalbild,

Fig. 2    logarithmierte Fouriertransformierte des Originalbildes,

Fig. 3    Ausschnitt der erneuten Fouriertransformierten, bei der der Störanteil sichtbar wird,

Fig. 4    entspricht Fig. 3, jedoch ist der Störanteil durch einen Korrekturanteil ersetzt,

Fig. 5    rücktransformiertes, korrigiertes Bild im Fourierraum und

Fig. 6    korrigiertes Bild.

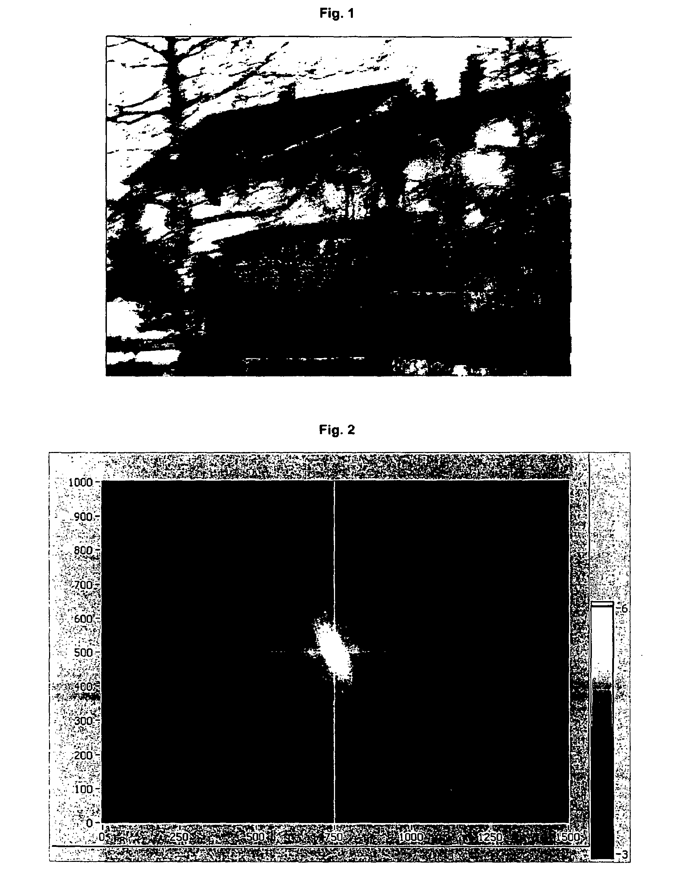

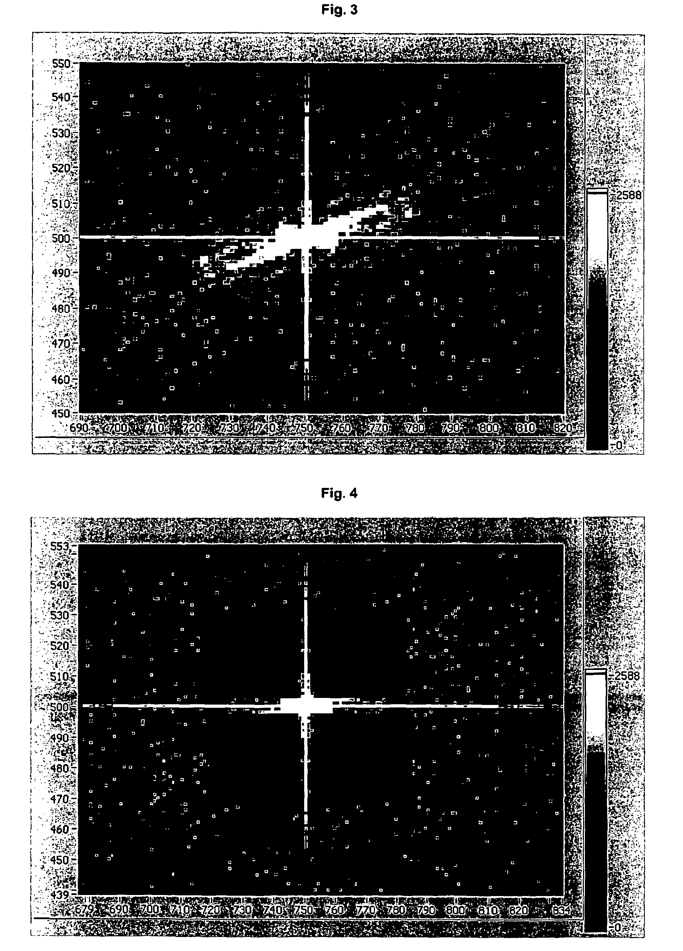

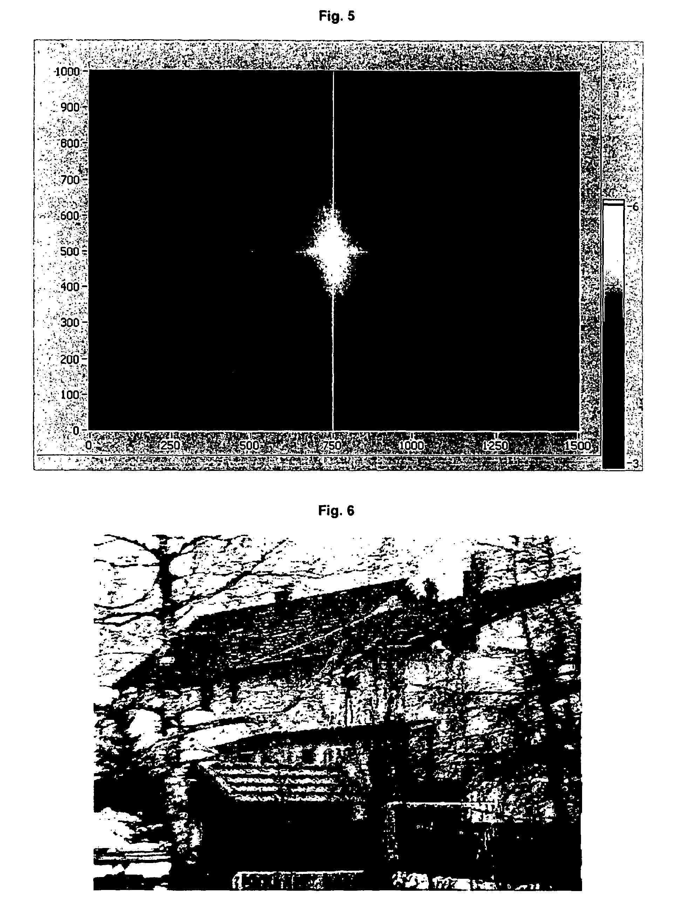

Fig. 1 zeigt eine verwackelte schwarz-weiß Aufnahme, welche nach dem erfindungsgemäßen Verfahren korrigiert werden soll. Für die Korrektur werden diese in Fig. 1 dargestellten Bilddaten in einem ersten Korrekturschritt Fouriertransformiert und in einem zweiten Korrekturschritt logarithmiert, um Bild- und Störanteil zu entkoppeln. Das Ergebnis ist in Fig. 2 dargestellt, wobei zur besseren Veranschaulichung noch eine Nyquist-Verschiebung vorgenommen wurde. In dieser Darstellung befindet sich im Zentrum der Punkt, der im Originalbild den Frequenzursprung aufweist. Über das im Bild leicht sichtbare Linienmuster kann die Verwacklungsrichtung ermittelt werden. Die Verschiebungsrichtung der Bilddaten liegt nämlich senkrecht auf den zu sehenden Linien. Sichtbar wird diese Verwacklung bzw. Verschiebung, indem von den in Fig. 2 dargestellten Bilddaten eine erneute Fouriertransformation vorgenommen wird. Das Ergebnis dieses dritten Korrekturschrittes ist in Fig. 3 dargestellt, wobei hier nur der mittlere Bildausschnitt vergrößert dargestellt wurde. Dieses Bild zeigt die mehrfach transformierten Bilddaten wiederum in einer räumlichen Darstellung, wobei jedoch jetzt der Verschiebungs- oder Störanteil und der Bildanteil entkoppelt sind. Der Störanteil ist schlaufenförmig im Zentrum des Bildes, jeweils an den zusammentreffenden Ecken der Quadranten zu sehen. Die Koordinatenachsen selbst geben die Bildinformation wieder, welche zu den Frequenzen mit der größten Amplitude in den Originalbilddaten gehört. Aufgabe des weiteren Vorgehens ist es nun, den Störanteil der in Fig. 3 im Zentrum schlaufenförmig hell erscheint, zu eliminieren, ohne dadurch die Bilddaten, welche sich auf den Koordinatenachsen aber auch im Hintergrund der gesamten Darstellung befinden, allzu stark zu verfälschen. Da die Störung im Allgemeinen beim Verwackeln der Kamera gerichtet erfolgt, sind, wie hier im Beispiel, zumeist nur zwei gegenüberliegenden Quadranten von der Störung betroffen, nur in zwei der Quadranten überlagert der Störanteil den Bildanteil. Deshalb ist es oftmals ausreichend, den Störanteil in diesen beiden Quadranten durch einen Korrekturanteil zu ersetzen. Idealerweise wird hier als Korrekturanteil der entsprechende Bereich der anderen ungestörten Quadranten verwendet, da dieser mit den Bildeigenschaften der anderen Quadranten im Wesentlichen übereinstimmt. Ein einfacheres Vorgehen bei der Korrektur besteht jedoch darin, einfach den inneren Bereich aller Quadranten durch einen Korrekturanteil zu ersetzen. Der Korrekturanteil kann dabei beispielsweise aus einem Mittelwert über die Daten des Quadranten mit einem Rauschanteil bestehen. Ein Beispiel hierfür ist in Fig. 4 dargestellt. Dabei kann vermieden werden, die Richtung der Störung zu ermitteln, was bei der vorher beschriebenen asymmetrischen Korrekturmaßnahme notwendig wäre. Als Korrekturanteil wird vorteilhafterweise ein für den Rest der Quadranten gemittelter Rauschanteil verwendet. Dass mit dieser Korrekturmaßnahme der Störanteil im Bilddatensatz eliminiert wurde, zeigt sich bei einer Darstellung im Frequenzraum nach einer erneuten Rücktransformation. Dies ist in Fig. 5 dargestellt. Diese Darstellung entspricht der von Fig. 2, wobei es sich jedoch bei Fig. 2 noch um den unkorrigierten Datensatz handelt. Man sieht deutlich, dass in Fig. 5 das Linienmuster, welches von der Bildverschiebung bei der Aufnahme herrührt, verschwunden ist. Der Stör- oder Verschiebungsanteil wurde also erfolgreich aus den Bilddaten eliminiert. So zeigt sich nach einer erneuten Rücktransformation auch das in Fig. 6 dargestellte korrigierte Bild, in welchem das Bildmotiv wesentlich deutlicher unverwackelt wiedergegeben ist. Der Grund dafür, dass es sich hierbei um ein weitaus verbessertes, aber leider nicht perfektes Bild handelt, liegt darin, dass bei der Korrektur des Störanteils leider nicht vermieden werden kann, dass auch ein Teil des eigentlichen Bildinhalts verloren geht. Dennoch handelt es sich bei dem in Fig. 6 dargestellten korrigierten Bild um eine wesentlich bessere Aufnahme als die in Fig. 1 dargestellte Originalaufnahme. Der verwaschene, verschwommene Bildeindruck konnte vollständig beseitigt werden, das eigentliche Bildmotiv tritt viel deutlicher zu Tage.

**Patentansprüche**

1. Verfahren zur Verarbeitung digitaler Bilddaten, von mit einer Kamera fotografisch erfassten Aufnahmen von Bildmotiven, mit den Schritten

   - Ermitteln verwackelter Aufnahmen, welche durch eine Relativbewegung zwischen dem zu erfassendem Bildmotiv und der Bild erfassenden Kamera während der Aufnahme unscharf wurden,
   - Korrigieren der verwackelten Aufnahmen und
   - Ausgeben der korrigierten Aufnahmen auf ein Speichermedium

   **dadurch gekennzeichnet, dass**
   zur Korrektur der Aufnahmen der zu erhaltende Bildanteil und der verwacklungsbedingte Störanteil durch Logarithmieren der Fouriertransformierten der Bilddaten zu einer Summe umgewandelt und so entkoppelt, der Störanteil durch erneute Fouriertransformation der logarithmierten Fouriertransformierten ermittelt, der ermittelte Störanteil durch einen Korrekturanteil ersetzt und Bildanteil und Korrekturanteil zusammengefasst und zu korrigierten Bilddaten rücktransformiert werden.

2. Verfahren nach Anspruch 1, **dadurch gekennzeichnet, dass** zur Ermittlung der verwackelten Aufnahmen die Bilddaten entlang wenigstens zweier Richtungen der x-y-Ebene innerhalb der verwackelten Aufnahme untersucht werden.

3. Verfahren nach Anspruch 2, **dadurch gekennzeichnet, dass** die Bilddaten entlang dreier Richtungen innerhalb der x-y-Ebene untersucht werden.

4. Verfahren nach Anspruch 2 oder 3, **dadurch gekennzeichnet**, entlang der zu untersuchenden Richtungen Dichtesprünge innerhalb der Bilddaten ermittelt werden.

5. Verfahren nach Anspruch 4, **dadurch gekennzeichnet, dass** die Bilddaten entlang einer zu untersuchenden Richtung als scharf bezeichnet werden, wenn sie eine gewisse Mindestanzahl von Dichtesprüngen aufweisen.

6. Verfahren nach Anspruch 1 oder 2, **dadurch gekennzeichnet, dass** die Bilddaten als verwackelte Aufnahmen klassifiziert werden, wenn sie in wenigstens einer zu untersuchenden Richtung als unscharf erkannt werden, in wenigstens einer anderen Richtung als scharf.

7. Verfahren nach Anspruch 1, **dadurch gekennzeichnet, dass** zur Bestimmung des Korrekturanteils sich entsprechende Bilddatenbereiche innerhalb der Quadranten der durch Fouriertransformation der logarithmierten Fouriertransformierten transformierten Bilddaten miteinander verglichen werden.

8. Verfahren nach Anspruch 7, **dadurch gekennzeichnet, dass** die Korrektur erfolgt, indem gestörte Bereiche innerhalb von Quadranten der transformierten Bilddaten an entsprechende Bilddatenbereiche innerhalb ungestörter Quadranten angepasst werden.

9. Verfahren nach Anspruch 8, **dadurch gekennzeichnet, dass** transformierte Bilddaten, die zu den Frequenzen mit den größten Amplituden gehören nicht verändert werden.

10. Verfahren nach Anspruch 1, **dadurch gekennzeichnet, dass** verwackelte Aufnahmen bei der Ausgabe **gekennzeichnet** werden.

11. Verfahren nach Anspruch 10, **dadurch gekennzeichnet, dass** verwackelte Aufnahmen auf einem Indexprint **gekennzeichnet** werden.

12. Verfahren nach Anspruch 1, **dadurch gekennzeichnet, dass** verwackelte und andere Aufnahmen getrennt ausgegeben werden.


**Claims**

1. Method for digital data processing of images, photos of image patterns taken with a camera, comprising the following stages:

    - detection of fuzzy photos, caused by a relative movement between the image pattern to take and the camera used to take the said pattern,
    - fuzzy photos corrections and
    - corrected photos output on a storage medium,

**characterized in** transforming, for photos correction, the image part to keep and the perturbation part, caused by the camera movement in relation to the image pattern to take, thanks to the Fourier transform logarithm calculation of the image data, into a sum, in uncoupling this way the said parts, in determining, thanks to a new Fourier transform logarithm calculation, the perturbation part, in the replacement of the determined perturbation part by a correction part, and **in that** the image part and the correction part are joined together and retransformed in corrected image data.

2. Method according to claim 1, **characterized in that** is analyzed, for the determination of the fuzzy photos, caused by the camera movement in relation to the image pattern to take, the image data along at least two directions of the plan x - y inside the fuzzy photo caused by the camera movement in relation to the image pattern to be taken.

3. Method according to claim 2, **characterized in that** the image data is analyzed along three directions inside the plan x-y.

4. Method according to claims 2 or 3, **characterized in that** density steps inside the image data are determined along the analysis directions.

5. Method according to claim 4, **characterized in that** the image data along an analysis direction are qualified as sharp if they have a minimal number of density steps.

6. Method according to claims 1 or 2, **characterized in that** the image data are qualified as fuzzy, because of the camera movement in relation to the image pattern to take, if they are identified as fuzzy in at least one of the directions to analyze, and as sharp in at least one other direction.

7. Method according to claim 1, **characterized in that**, for the determination of the correction parts, corresponding image data areas inside the quadrants of the image data, transformed thanks to a Fourier transform of the Fourier transforms obtained by logarithm calculation, are compared one with each other.

8. Method according to claim 7, **characterized in that** the correction is done by adapting the perturbed areas inside the quadrants of the transformed image data to corresponding image data areas inside quadrants without perturbation.

9. Method according to claim 8, **characterized in that** the transformed image data, which belong to the frequencies with the biggest amplitudes, are not modified.

10. Method according to claim 1, **characterized in that** fuzzy photos caused by the camera movement in relation to the image pattern to take are labelled during the output.

11. Method according to claim 10, **characterized in that** fuzzy photos caused by the camera movement in relation to the image pattern to take are labelled on an indexprint.

12. Method according to claim 1, **characterized in that** fuzzy photos caused by the camera movement in relation to the image pattern to take, and other photos, are separately outputted.

**Revendications**

1. Procédé pour le traitement de données numériques d'images, de photos de motifs d'images pris avec une caméra, comprenant les étapes suivantes :

   - la détection de photos floues dues à un mouvement relatif entre le motif d'image à prendre et la caméra avec laquelle ledit motif est pris,
   - corrections des photos floues et
   - sortie des photos corrigées sur un médium de stockage.

   **caractérisé en ce que** l'on transforme, pour la correction de photos, la partie de l'image à conserver et la partie de la perturbation, due au mouvement de la camera par rapport au motif d'image à prendre, grâce au calcul du logarithme de la transformée de Fourier des données d'image, en une somme et découple de cette manière lesdites parties, que l'on détermine, grâce à un nouveau calcul du logarithme de la transformée de Fourier, la partie de la perturbation, que la partie de la perturbation déterminée est remplacée par une partie de correction et que la partie d'image et la partie de correction sont regroupées et retransformées en parties d'image corrigées.

2. Procédé selon la revendication 1, **caractérisé en ce que** l'on analyse, pour la détermination des photos floues, due au mouvement de la camera par rapport au motif d'image à prendre, les données d'image le long d'au moins deux directions du plan x-y à l'intérieur de la photo floue due au mouvement de la camera par rapport au motif d'image à prendre.

3. Procédé selon la revendication 2, **caractérisé en ce que** l'on analyse les données d'image le long de trois directions à l'intérieur du plan x-y.

4. Procédé selon les revendications 2 ou 3, **caractérisé en ce que** l'on détermine, le long des directions à analyser, des sauts de densité à l'intérieur des données d'image.

**5.** Procédé selon la revendication 4, **caractérisé en ce que** l'on qualifie les données d'image le long d'une direction à analyser comme étant nettes si elles présentent un nombre minimal de sauts de densité.

**6.** Procédé selon les revendications 1 ou 2, **caractérisé en ce que** l'on qualifie les données d'image comme photos floues, due au mouvement de la camera par rapport au motif d'image à prendre, si elles sont reconnues comme étant floues dans au moins une des directions à analyser, et dans au moins une autre direction comme étant nette.

**7.** Procédé selon la revendication 1, **caractérisé en ce que** l'on compare entre elles, pour la détermination des parties de correction, des zones de données d'image correspondantes à l'intérieur des quadrants des données d'image transformées grâce à une transformation de Fourier des transformées de Fourier obtenues par le calcul de logarithme.

**8.** Procédé selon la revendication 7, **caractérisé en ce que** l'on effectue la correction en adaptant des zones perturbées à l'intérieur des quadrants des données d'image transformées à des zones de données d'image correspondantes à l'intérieur des quadrants sans perturbation.

**9.** Procédé selon la revendication 8, **caractérisé en ce que** les données d'image transformées, qui appartiennent aux fréquences avec les plus grandes amplitudes, ne soient pas modifiées.

**10.** Procédé selon la revendication 1, **caractérisé en ce que** des photos qui sont floues dues au mouvement de la camera par rapport au motif d'image à prendre sont marquées lors de la sortie.

**11.** Procédé selon la revendication 10, **caractérisé en ce que** des photos qui sont floues dues au mouvement de la camera par rapport au motif d'image à prendre sont marquées sur un indexprint.

**12.** Procédé selon la revendication 1, **caractérisé en ce que** des photos qui sont floues, dues au mouvement de la camera par rapport au motif d'image à prendre, et d'autres photos sont sorties de façon séparé.

**Fig. 1**

**Fig. 2**

Fig. 3

Fig. 4

**Fig. 5**

**Fig. 6**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 3408765 C2
- US 2003011717 A
- US 2002122133 A
- US 5111515 A
- EP 1122689 A